# EUROPEAN PATENT SPECIFICATION

(11) **EP 2 799 130 B1**
(45) Date of publication and mention of the grant of the patent: **02.08.2017**
(21) Application number: 12862508.4
(22) Date of filing: 27.08.2012
(51) Int. Cl.: B01J 20/30, B01D 53/04, B01D 53/62, C10K 1/20, C10K 1/26

(54) **METHOD FOR MANUFACTURING A CARBON DIOXIDE ADSORBENT, METHOD FOR REDUCING CARBON DIOXIDE AND APPARATUS FOR SAME**
VERFAHREN ZUR HERSTELLUNG EINES KOHLENDIOXIDADSORPTIONSMITTELS, VERFAHREN ZUR REDUZIERUNG VON KOHLENDIOXID UND VORRICHTUNG DAFÜR
PROCÉDÉ DE FABRICATION D'UN ADSORBANT DE DIOXYDE DE CARBONE, PROCÉDÉ DE RÉDUCTION DE DIOXYDE DE CARBONE ET APPAREIL ASSOCIÉ

(30) Priority: 27.12.2011 KR 20110143751
(43) Date of publication of application: 05.11.2014
(73) Proprietor: POSCO, Gyeongsangbuk-do 790-300 (KR)
(72) Inventor: LEE, Seungmoon, Pohang-si Gyeongsangbuk-do 790-300 (KR); JUNG, Jonghwun, Pohang-si Gyeongsangbuk-do 790-300 (KR); KIM, Ki Hyun, Daejeon 302-827 (KR); KIM, Sung-Man, Pohang-si Gyeongsangbuk-do 790-300 (KR)
(74) Representative: Potter Clarkson LLP
(86) International application number: PCT/KR2012/006808
(87) International publication number: WO 2013/100306

(56) References cited:
- WO-A1-2008/101293
- JP-A- H0 788 362
- JP-A- S4 924 893
- KR-A- 19990 073 117
- KR-A- 20060 109 212
- KR-A- 20100 038 204
- US-A1- 2011 250 121

## Description

### [Technical Field]

The present invention relates to an adsorbent collecting carbon dioxide, and more particularly, to a method of manufacturing a carbon dioxide adsorbent, and a method and an apparatus for reducing carbon dioxide.

### [Background Art]

Carbon dioxide generated when fossil fuel is combusted is a representative greenhouse gas causing global warming, and recently, regulations on discharge thereof have become stricter. A gas containing a large amount of carbon dioxide, such as a combustion exhaust gas or a blast furnace gas, generated in an iron works is added to a general pressure swing adsorption (PSA) process to collect and recover carbon dioxide.

A general pressure adsorption device is constituted by an adsorption column collecting carbon dioxide by using an adsorbent, and a regeneration column applying heat to the adsorbent collecting carbon dioxide to regenerate the adsorbent. The regenerated adsorbent is supplied back to the adsorption column to participate in a reaction. The adsorbent used for a predetermined period or more so that it loses an active site is discarded, and a replacement amount of adsorbent is added to the adsorption column.

In the pressure swing adsorption process, a solid adsorbent such as activated carbon, silica, and alumina is used as the adsorbent, and carbon dioxide is collected by a physical adsorption method. However, this method has limitations in that, since the commercially available adsorbent is costly, an operation cost is high, and since the physical adsorption method is used, bonding force is weak, and thus collection efficiency of carbon dioxide at a large capacity and a high concentration is low.

The above information disclosed in this Background section is only for enhancement of understanding of the background of the invention and therefore it may contain information that does not form the prior art that is already known in this country to a person of ordinary skill in the art.

JPH 0788362 describes a low-cost gaseous CO₂ adsorbent capable of efficiently fixing gaseous CO₂ in the air. The adsorbent is produced by the addition of water to industrial waste made of coal ash or blast furnace slag, which is then granulated or crushed to obtain the objective gaseous CO₂ adsorbent made of a powdery, granular or crushed material containing the hydrate of a calcium compound.

US 2011/250121 describes a method of absorbing and desorbing a gaseous reactant on a solid reactant. The solid reactant is an ammonia salt selected from the group consisting of alkali ammonium salts, alkali ammonium earth salts or a combination thereof.

### [DISCLOSURE]

### [Technical Problem]

The present invention has been made in an effort to provide a method of manufacturing a carbon dioxide adsorbent, which has a low manufacturing cost and an excellent carbon dioxide collection effect, and a method and an apparatus of reducing carbon dioxide, to which the adsorbent is applied.

### [Technical Solution]

An exemplary embodiment of the present invention provides a method of manufacturing a carbon dioxide adsorbent, including: providing ironmaking sludge; mixing the ironmaking sludge and a binder; manufacturing a pellet by injecting ammonia into the ironmaking sludge mixed with the binder; and drying the pellet.

A concentration of ammonia injected in the manufacturing of the pellet may be 5 to 30 wt%.

The method may further include performing concentration and dehydration treatment before the ironmaking sludge is mixed with the binder.

A filter press may be used in the dehydration treatment.

The ironmaking sludge subjected to the dehydration treatment may include moisture in an amount of 8 %.

The binder may be cement or bentonite.

A size of the pellet may be 1 to 25 mm.

Another exemplary embodiment of the present invention provides an apparatus for reducing carbon dioxide, including: an adsorption apparatus adopting an adsorbent manufactured by the method of any one of claims 1 to 7, blowing an exhaust gas including carbon dioxide and adsorbing carbon dioxide included in the exhaust gas onto the adsorbent; a regeneration apparatus applying heat to the adsorbent onto which carbon dioxide is adsorbed while passing through the adsorption apparatus to desorb adsorbed carbon dioxide; a pH measurement apparatus measuring pH of the adsorbent from which carbon dioxide is desorbed while passing through the regeneration apparatus; and a rotary chamber that sprays ammonia onto the adsorbent after it has passed through the pH measurement apparatus, in which the pH measurement apparatus selectively supplies the adsorbent according to the measured pH to the rotary chamber. Ironmaking sludge heat may be used in the regeneration apparatus to supply heat to the adsorbent.

If the pH measured in the pH measurement apparatus is more than 10, the adsorbent may be supplied to the rotary chamber, and if the pH measured in the pH measurement apparatus is 10 or less, the adsorbent may be recycled to manufacture reduced iron.

The apparatus may further include a condenser for receiving compounds of ammonia and carbon dioxide desorbed from the regeneration apparatus to separate the compounds into ammonia and carbon dioxide by using a difference in condensation temperatures.

The ammonia separated in the condenser may be supplied to the rotary chamber.

The exhaust gas including carbon dioxide may be at least one selected from a blast furnace exhaust gas (BFG), a coke oven gas (COG), and a FINEX exhaust gas (FOG).

Yet another exemplary embodiment of the present invention provides a method of reducing carbon dioxide, to which an adsorbent manufactured by the method of any one of claims 1 to 7 is applied, including: adsorbing carbon dioxide from an exhaust gas by bringing the exhaust gas including carbon dioxide into contact with the adsorbent; desorbing the carbon dioxide adsorbed onto the adsorbent; judging whether pH of the adsorbent from which the carbon dioxide is desorbed is more than a set value; and if the pH of the adsorbent is more than the set value, spraying ammonia onto the adsorbent, wherein the adsorbing of carbon dioxide to the spraying of ammonia are performed again by using the adsorbent onto which the ammonia is sprayed.

Ironmaking sludge heat may be used to desorb the carbon dioxide.

If the pH of the adsorbent is not more than the set value, the adsorbent may be recycled to manufacture reduced iron.

The set value of the pH may be 10.

Compounds of the ammonia and the carbon dioxide may be desorbed when the carbon dioxide adsorbed onto the adsorbent is desorbed, and the method may further include separating the compounds into the ammonia and the carbon dioxide.

The separated ammonia may be used in the spraying of ammonia onto the adsorbent.

The exhaust gas including carbon dioxide may be at least one selected from a blast furnace exhaust gas (BFG), a coke oven gas (COG), and a FINEX exhaust gas (FOG).

Still another exemplary embodiment of the present invention provides a carbon dioxide adsorbent manufactured by the method of any one of claims 1 to 7 and carrying ammonia.

A concentration of iron of an ironmaking waste used in the manufacturing may be 40 to 60 %.

A concentration of carbon of the ironmaking waste used in the manufacturing may be less than 25 %. The adsorbent is in the form of a pellet in a size of 1 to 25 mm.

### [Advantageous Effects]

According to the exemplary embodiments of the present invention, since carbon dioxide is collected by using a chemical absorption reaction, it is possible to increase collection efficiency of carbon dioxide as compared to an existing physical adsorbent. Further, since desorption reactivity of carbon dioxide is improved, efficiency is increased.

Further, it is possible to reduce a manufacturing cost by manufacturing a low-priced adsorbent.

### [Description of the Drawings]

FIG. 1 is a flowchart of a method of manufacturing a carbon dioxide adsorbent according to an exemplary embodiment of the present invention.
FIG. 2 is a block diagram showing apparatuses used in the method of manufacturing the carbon dioxide adsorbent according to the exemplary embodiment of the present invention.
FIG. 3 is a schematic diagram of an apparatus for reducing carbon dioxide according to the exemplary embodiment of the present invention.
FIG. 4 is a flowchart of a method of reducing carbon dioxide according to the exemplary embodiment of the present invention.

### [Mode for Invention]

An exemplary embodiment of the present invention will hereinafter be described in detail with reference to the accompanying drawings.

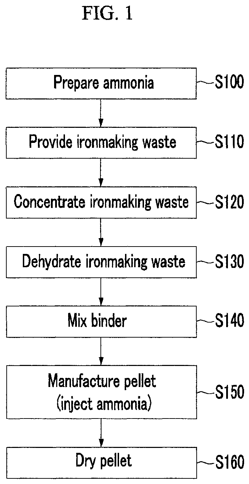

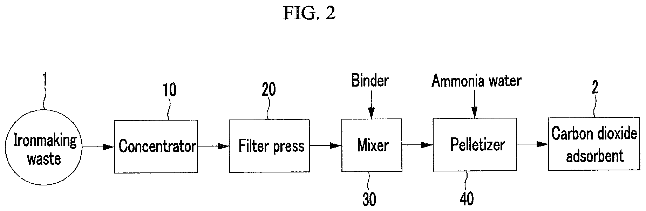

FIG. 1 is a flowchart of a method of manufacturing a carbon dioxide adsorbent according to an exemplary embodiment of the present invention. Further, FIG. 2 is a block diagram showing apparatuses used in the method of manufacturing the carbon dioxide adsorbent according to the exemplary embodiment of the present invention.

As illustrated in FIGS. 1 and 2, if ammonia (NH₃) is prepared (S100) and ironmaking waste 1 is provided (S110), the ironmaking waste 1 is supplied to a concentrator 10. That is, the ironmaking waste 1 is concentrated (S120). Herein, the ironmaking waste 1 is an ironmaking sludge generated in an ironmaking process. Meanwhile, in the provided ironmaking waste 1, a concentration of iron (Fe) may be 40 to 60 % or a concentration of carbon may be less than 25%.

The ironmaking waste 1 concentrated in the concentrator 10 is supplied to a filter press 20. The ironmaking waste 1 is subjected to dehydration treatment in the filter press 20 (S130). The dehydration treatment is performed so that the ironmaking waste 1 includes moisture in an amount of 8 %. Of course the dehydration treatment is performed only in the case of the ironmaking waste 1 including moisture, and may be omitted in the case of the ironmaking waste 1 not including moisture.

The ironmaking waste 1 subjected to the dehydration treatment is supplied to a mixer 30. Further, a binder is supplied to the mixer 30 to be mixed with the ironmaking waste 1 (S140). Herein, the binder may be cement or bentonite.

The ironmaking waste 1 mixed with the binder is supplied to a pelletizer 40. Further, prepared ammonia is injected into the pelletizer 40. The pelletizer 40 manufactures a pellet where ammonia is adsorbed onto the ironmaking waste 1 (S150). A concentration of ammonia injected in the manufacturing of the pellet may be 5 to 30 wt%.

When the pellet is manufactured in the pelletizer 40, the pellet is dried (S160). Further, a size of the pellet may be 1 to 25 mm. The drying of the pellet may be performed at room temperature. The pellet manufactured by the aforementioned method serves as a carbon dioxide adsorbent 2. That is, the pellet is supplied to an apparatus 50 for reducing carbon dioxide to reduce carbon dioxide.

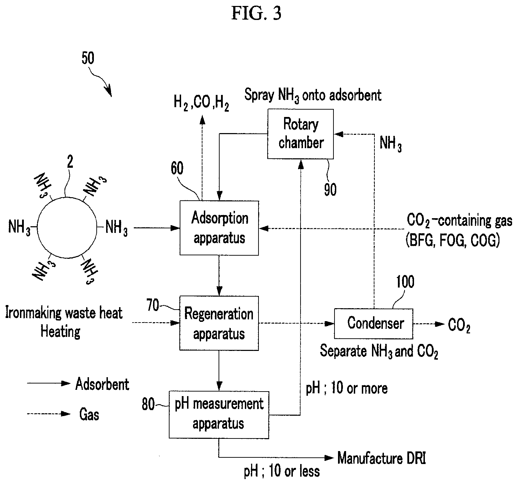

FIG. 3 is a schematic diagram of the apparatus for reducing carbon dioxide according to the exemplary embodiment of the present invention.

As illustrated in FIG. 3, the apparatus 50 for reducing carbon dioxide according to the exemplary embodiment of the present invention includes an adsorption apparatus 60, a regeneration apparatus 70, a pH measurement apparatus 80, a rotary chamber 90, and a condenser 100.

The adsorption apparatus 60 adsorbs carbon dioxide included in an exhaust gas by using the adsorbent 2 manufactured by the method of manufacturing the carbon dioxide adsorbent 2 according to the exemplary embodiment of the present invention. That is, the adsorbent 2 and the exhaust gas including carbon dioxide are supplied to the adsorption apparatus 60, and the adsorbent 2 and the exhaust gas come into contact with each other to adsorb carbon dioxide included in the exhaust gas onto the adsorbent 2. Herein, the exhaust gas including carbon dioxide may be at least one exhaust gas of a blast furnace exhaust gas (blast furnace gas; BFG), a coke oven gas (COG), and a FINEX exhaust gas (FINEX off-gas; FOG). Meanwhile, an internal temperature of the adsorption apparatus 60 may be room temperature to 30 C. Further, the exhaust gas from which carbon dioxide is removed according to adsorption of carbon dioxide onto the adsorbent 2 is separated into materials such as hydrogen (H₂), carbon monoxide (CO), and nitrogen (N₂). Hydrogen and carbon monoxide are used to reduce the iron ore, and nitrogen may be used as a gas for transporting of ironmaking.

The regeneration apparatus 70 desorbs carbon dioxide adsorbed onto the adsorbent 2. That is, the adsorbent 2 onto which carbon dioxide is adsorbed while passing through the adsorption apparatus 60 is supplied to the regeneration apparatus 70. Further, in the regeneration apparatus 70, the adsorbent 2 onto which carbon dioxide is adsorbed is heated to desorb carbon dioxide. Ironmaking waste heat is used in the heating, and a heating temperature may be 100 C.

Meanwhile, the adsorption apparatus 60 and the regeneration apparatus 70 may be formed to have a fluidization channel shape. Adsorption reactivity of carbon dioxide may be improved and carbon dioxide may be adsorbed in a large quantity by circulating the adsorbent that is a solid particle between the adsorption apparatus 60 and the regeneration apparatus 70. Moreover, since it is unnecessary to add pressure and reduce the pressure, power consumption is reduced, and thus energy consumption for reducing carbon dioxide is reduced.

The pH measurement apparatus 80 measures pH of the adsorbent 2. Further, whether the adsorbent 2 is to be reused is judged by comparing the measured pH of the adsorbent 2 to a set value. If the pH of the adsorbent 2 is more than the set value, the adsorbent 2 is reused, and if the pH of the adsorbent 2 is not more than the set value, the adsorbent 2 is used to manufacture a reduced iron (direct reduced iron; DRI). Herein, the set value may be pH 10.

Meanwhile, as described above, it is easy to replace the initially supplied adsorbent 2 according to selective reuse of the adsorbent 2. That is, supplying of carbon dioxide does not need to be stopped, and a replacement cost of the adsorbent 2 is not accrued.

The rotary chamber 90 receives the adsorbent 2 from the pH measurement apparatus 80 to spray ammonia onto the adsorbent 2. The adsorbent 2 onto which ammonia is adsorbed while passing through the rotary chamber 90 is supplied to the adsorption apparatus 60 to be reused. That is, the adsorbent 2 where the pH measured in the pH measurement apparatus 80 is more than the set value is supplied to the rotary chamber 90.

The condenser 100 receives carbon dioxide desorbed from the regeneration apparatus 70. When carbon dioxide is desorbed from the regeneration apparatus 70, compounds of carbon dioxide and ammonia are desorbed. That is, the compounds of carbon dioxide and ammonia are supplied to the condenser 100. Moreover, the condenser 100 separates the compounds into carbon dioxide and ammonia. Herein, separated ammonia is supplied to the rotary chamber 90 to be used as ammonia sprayed onto the adsorbent 2. Separated carbon dioxide may be discharged to the outside, or may be reused in a CO₂ reforming process or a reverse water gas shift reaction process to manufacture hydrogen and carbon monoxide. As described above, hydrogen and carbon monoxide may be used to reduce the iron ore.

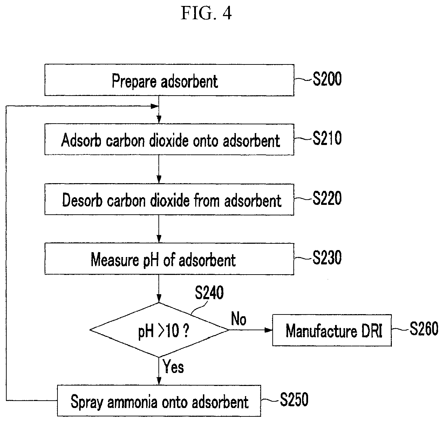

FIG. 4 is a flowchart of a method of reducing carbon dioxide according to the exemplary embodiment of the present invention.

As illustrated in FIG. 4, if the adsorbent 2 manufactured by the method of manufacturing the carbon dioxide adsorbent 2 according to the exemplary embodiment of the present invention is prepared (S200), the adsorbent 2 is supplied to the adsorption apparatus 60 to which the exhaust gas including carbon dioxide is supplied to adsorb carbon dioxide of the exhaust gas onto the adsorbent 2 (S210).

The adsorbent 2 onto which carbon dioxide of the exhaust gas is adsorbed is supplied to the regeneration apparatus 70, and the regeneration apparatus 70 desorbs carbon dioxide from the adsorbent 2 by heating the adsorbent 2 onto which carbon dioxide of the exhaust gas is adsorbed by using ironmaking waste heat (S220). Herein, desorption of carbon dioxide may be performed by desorbing the compounds of ammonia and carbon dioxide adsorbed onto the adsorbent 2.

The adsorbent 2 from which carbon dioxide is desorbed is supplied to the pH measurement apparatus 80, and the pH measurement apparatus 80 measures the pH of the adsorbent 2 (S230). Further, the pH measurement apparatus 80 judges whether the pH of the adsorbent 2 is more than the set value (S240). Herein, the set value of the pH may be pH10.

If the pH of the adsorbent 2 is judged to be more than the set value, the pH measurement apparatus 80 supplies the adsorbent 2 from which carbon dioxide is desorbed to the rotary chamber 90. Further, ammonia is sprayed onto the adsorbent 2 supplied to the rotary chamber 90 (S250). Herein, ammonia supplied to the rotary chamber 90 after the compounds of ammonia and carbon dioxide are separated into ammonia and carbon dioxide in the condenser 100 is used as sprayed ammonia.

If the pH of the adsorbent 2 is judged to be not more than the set value, the adsorbent 2 from which carbon dioxide is desorbed is used to manufacture the reduced iron (S260).

According to the exemplary embodiments of the present invention, since carbon dioxide is collected by using a chemical absorption reaction, it is possible to increase collection efficiency of carbon dioxide as compared to an existing physical adsorbent. Further, since desorption reactivity of carbon dioxide is improved, efficiency is increased. Moreover, it is possible to reduce a manufacturing cost by manufacturing the low-priced adsorbent 2.

While this invention has been described in connection with what is presently considered to be practical exemplary embodiments, it is to be understood that the invention is not limited to the disclosed embodiments.

## Claims

1. A method of manufacturing a carbon dioxide adsorbent, comprising:
providing ironmaking sludge;
mixing the ironmaking sludge and a binder;
manufacturing a pellet by injecting ammonia into the ironmaking sludge mixed with the binder; and
drying the pellet.

2. The method of claim 1, wherein a concentration of ammonia injected in the manufacturing of the pellet is 5 to 30 wt%.

3. The method of claim 1, further comprising performing concentration and dehydration treatment before the ironmaking sludge is mixed with the binder.

4. The method of claim 3, wherein a filter press is used in the dehydration treatment.

5. The method of claim 3, wherein the ironmaking sludge subjected to the dehydration treatment includes moisture in an amount of 8 %.

6. The method of claim 1, wherein the binder is cement or bentonite.

7. The method of claim 1, wherein the size of the pellet is 1 to 25 mm.

8. An apparatus of reducing carbon dioxide, comprising:
an adsorption apparatus adopting an adsorbent manufactured by the method of any one of claims 1 to 7, blowing an exhaust gas including carbon dioxide and adsorbing carbon dioxide included in the exhaust gas onto the adsorbent;
a regeneration apparatus applying heat to the adsorbent onto which carbon dioxide is adsorbed while passing through the adsorption apparatus to desorb the adsorbed carbon dioxide;
a pH measurement apparatus measuring pH of the adsorbent from which carbon dioxide is desorbed while passing through the regeneration apparatus; and
a rotary chamber that sprays ammonia onto the adsorbent after it has passed through the pH measurement apparatus,
wherein the pH measurement apparatus selectively supplies the adsorbent according to the measured pH to the rotary chamber.

9. The apparatus of claim 8, wherein ironmaking sludge heat is used in the regeneration apparatus to supply heat to the adsorbent.

10. The apparatus of claim 8, wherein
if the pH measured in the pH measurement apparatus is more than 10, the adsorbent is supplied to the rotary chamber, and
if the pH measured in the pH measurement apparatus is 10 or less, the adsorbent is recycled to manufacture reduced iron.

11. The apparatus of claim 8, further comprising a condenser for receiving compounds of ammonia and carbon dioxide desorbed from the regeneration apparatus to separate the compounds into ammonia and carbon dioxide by using a difference in condensation temperatures.

12. The apparatus of claim 11, wherein the ammonia separated in the condenser is supplied to the rotary chamber.

13. The apparatus of claim 8, wherein the exhaust gas including carbon dioxide is at least one selected from a blast furnace exhaust gas (BFG), a coke oven gas (COG), and a FINEX exhaust gas (FOG).

14. A carbon dioxide adsorbent manufactured by the method of any one of claims 1 to 7 and carrying ammonia.

15. The carbon dioxide adsorbent of claim 14, wherein the concentration of iron in the ironmaking sludge used in the manufacturing is 40 to 60 %.

16. The carbon dioxide adsorbent of claim 14, wherein the concentration of carbon in the ironmaking sludge used in the manufacturing is less than 25 %.

17. The carbon dioxide adsorbent of claim 14, wherein the adsorbent is in the form of a pellet in a size of 1 to 25 mm.

## Patentansprüche

1. Verfahren zum Herstellen eines Kohlendioxid-Adsorptionsmittels, umfassend:
Bereitstellen von Schlamm von der Eisenerzeugung;
Mischen des Schlamms von der Eisenerzeugung und eines Bindemittels;
Herstellen eines Pellets durch Eindüsung von Ammoniak in den mit dem Bindemittel vermischten Schlamm von der Eisenerzeugung; und
Trocknen des Pellets.

2. Verfahren nach Anspruch 1, wobei eine Konzentration des bei der Herstellung des Pellets eingedüsten Ammoniaks 5 bis 30 Gew.-% beträgt.

3. Verfahren nach Anspruch 1, das des Weiteren das Durchführen einer Konzentrations- und Dehydrierungsbehandlung umfasst, bevor der Schlamm von der Eisenerzeugung mit dem Bindemittel gemischt wird.

4. Verfahren nach Anspruch 3, wobei bei der Dehydrierungsbehandlung eine Filterpresse verwendet wird.

5. Verfahren nach Anspruch 3, wobei der der Dehydrierungsbehandlung unterzogene Schlamm von der Eisenerzeugung Feuchtigkeit bei einem Gehalt von 8 % enthält.

6. Verfahren nach Anspruch 1, wobei das Bindemittel Zement oder Bentonit ist.

7. Verfahren nach Anspruch 1, wobei die Größe des Pellets 1 bis 25 mm beträgt.

8. Vorrichtung zum Reduzieren von Kohlendioxid, umfassend:
eine Adsorptionsvorrichtung, die ein Adsorptionsmittel aufnimmt, das gemäß dem Verfahren nach einem der Ansprüche 1 bis 7 hergestellt ist, und die ein Abgas einschließlich Kohlendioxid ausbläst und das im Abgas enthaltene Kohlendioxid auf das Adsorptionsmittel adsorbiert;
eine Regenerationsvorrichtung, die dem Adsorptionsmittel, auf das Kohlendioxid adsorbiert wird, Hitze zuführt, während es durch die Adsorptionsvorrichtung läuft, um das adsorbierte Kohlendioxid zu desorbieren;
eine pH-Messvorrichtung, die den pH-Wert des Adsorptionsmittels misst, von dem Kohlendioxid desorbiert wird, während es durch die Regenerationsvorrichtung läuft; und
eine Rotationskammer, die Ammoniak auf das Adsorptionsmittel sprüht, nachdem es durch die pH-Messvorrichtung gelaufen ist,
wobei die pH-Messvorrichtung das Adsorptionsmittel entsprechend dem gemessenen pH-Wert selektiv in die Rotationskammer speist.

9. Vorrichtung nach Anspruch 8, wobei die Hitze des Schlamms von der Eisenerzeugung in der Regenerationsvorrichtung verwendet wird, um dem Adsorptionsmittel Hitze zuzuführen.

10. Vorrichtung nach Anspruch 8, wobei,
falls der in der pH-Messvorrichtung gemessene pH-Wert mehr als 10 beträgt, das Adsorptionsmittel in die Rotationskammer gespeist wird, und
falls der in der pH-Messvorrichtung gemessene pH-Wert 10 oder weniger beträgt, das Adsorptionsmittel zum Herstellen von reduziertem Eisen recycelt wird.

11. Vorrichtung nach Anspruch 8, die des Weiteren einen Kondensator zum Aufnehmen von aus der Regenerationsvorrichtung desorbierten Verbindungen von Ammoniak und Kohlendioxid umfasst, um die Verbindungen durch Nutzung einer Differenz der Kondensationstemperaturen in Ammoniak und Kohlendioxid zu trennen.

12. Vorrichtung nach Anspruch 11, wobei das im Kondensator abgeschiedene Ammoniak in die Rotationskammer gespeist wird.

13. Vorrichtung nach Anspruch 8, wobei das Abgas einschließlich Kohlendioxid mindestens eines ist, das aus einem Hochofen-Gichtgas, einem Kokereigas und einem FINEX-Abgas ausgewählt ist.

14. Kohlendioxid-Adsorptionsmittel, das gemäß dem Verfahren nach einem der Ansprüche 1 bis 7 hergestellt ist und Ammoniak trägt.

15. Kohlendioxid-Adsorptionsmittel nach Anspruch 14, wobei die Konzentration von Eisen in dem bei der Herstellung verwendeten Schlamm von der Eisenerzeugung 40 bis 60 % beträgt.

16. Kohlendioxid-Adsorptionsmittel nach Anspruch 14, wobei die Konzentration von Kohlenstoff in dem bei der Herstellung verwendeten Schlamm von der Eisenerzeugung weniger als 25 % beträgt.

17. Kohlendioxid-Adsorptionsmittel nach Anspruch 14, wobei das Adsorptionsmittel in Form eines Pellets in einer Größe von 1 bis 25 mm vorliegt.

## Revendications

1. Procédé de fabrication d'un adsorbant de dioxyde de carbone, comprenant :
la fourniture de boues de production de fer ;
le mélange des boues de production de fer et d'un liant ;
la fabrication d'une boulette par injection d'ammoniac dans les boues de production de fer mélangées avec le liant ; et
le séchage de la boulette.

2. Procédé selon la revendication 1, dans lequel une concentration d'ammoniac injecté dans la fabrication de la boulette est de 5 à 30 % en poids.

3. Procédé selon la revendication 1, comprenant en outre la réalisation d'un traitement de concentration et de déshydratation avant que les boues de production de fer soient mélangées avec le liant.

4. Procédé selon la revendication 3, dans lequel un filtre-presse est utilisé dans le traitement de déshydratation.

5. Procédé selon la revendication 3, dans lequel les boues de production de fer soumises au traitement de déshydratation comportent de l'humidité dans une quantité de 8 %.

6. Procédé selon la revendication 1, dans lequel le liant est du ciment ou de la bentonite.

7. Procédé selon la revendication 1, dans lequel la taille de la boulette est de 1 à 25 mm.

8. Appareil de réduction de dioxyde de carbone, comprenant :
un appareil d'adsorption adoptant un adsorbant fabriqué par le procédé selon l'une quelconque des revendications 1 à 7, soufflant un gaz d'échappement comportant du dioxyde de carbone et adsorbant le dioxyde de carbone inclus dans le gaz d'échappement sur l'adsorbant ;
un appareil de régénération appliquant de la chaleur à l'adsorbant sur lequel le dioxyde de carbone est adsorbé tout en traversant l'appareil d'adsorption pour désorber le dioxyde de carbone adsorbé ;
un appareil de mesure de pH mesurant le pH de l'adsorbant à partir duquel le dioxyde de carbone est désorbé tout en traversant l'appareil de régénération ; et
une chambre rotative qui pulvérise de l'ammoniac sur l'adsorbant après qu'il a traversé l'appareil de mesure de pH,
dans lequel l'appareil de mesure de pH fournit sélectivement l'adsorbant selon le pH mesuré à la chambre rotative.

9. Appareil selon la revendication 8, dans lequel la chaleur des boues de production de fer est utilisée dans l'appareil de régénération pour fournir de la chaleur à l'adsorbant.

10. Appareil selon la revendication 8, dans lequel
si le pH mesuré dans l'appareil de mesure de pH est supérieur à 10, l'adsorbant est fourni à la chambre rotative, et
si le pH mesuré dans l'appareil de mesure de pH est de 10 ou moins, l'adsorbant est recyclé pour fabriquer du fer réduit.

11. Appareil selon la revendication 8, comprenant en outre un condenseur pour recevoir des composés d'ammoniac et du dioxyde de carbone désorbé par l'appareil de régénération pour séparer les composés en ammoniac et en dioxyde de carbone par l'utilisation d'une différence de températures de condensation.

12. Appareil selon la revendication 11, dans lequel l'ammoniac séparé dans le condenseur est fourni à la chambre rotative.

13. Appareil selon la revendication 8, dans lequel le gaz d'échappement comportant du dioxyde de carbone est au moins un gaz choisi parmi un gaz d'échappement de haut fourneau (BFG), un gaz de cokerie (COG) et un gaz d'échappement FINEX (FOG).

14. Adsorbant de dioxyde de carbone fabriqué par le procédé selon l'une quelconque des revendications 1 à 7 et transportant de l'ammoniac.

15. Adsorbant de dioxyde de carbone selon la revendication 14, dans lequel la concentration de fer dans les boues de production de fer utilisées dans la fabrication est de 40 à 60 %.

16. Adsorbant de dioxyde de carbone selon la revendication 14, dans lequel la concentration de carbone dans les boues de production de fer utilisées dans la fabrication est inférieure à 25 %.

17. Adsorbant de dioxyde de carbone selon la revendication 14, dans lequel l'adsorbant est sous forme d'une boulette d'une taille de 1 à 25 mm.
